# EUROPÄISCHE PATENTSCHRIFT

(11) **EP 2 621 609 B1**
(45) Veröffentlichungstag und Bekanntmachung des Hinweises auf die Patenterteilung: **06.01.2016**
(21) Anmeldenummer: 11773214.9
(22) Anmeldetag: 27.09.2011
(51) Int. Cl.: B01D 53/14, B01D 53/34, C10L 3/10

(54) **VERFAHREN ZUR ABSCHEIDUNG VON KOHLENDIOXID, SOWIE GASTURBINENANLAGE MIT KOHLENDIOXID ABSCHEIDUNG**
METHOD FOR REMOVING CARBON DIOXIDE, AND ALSO GAS TURBINE INSTALLATION WITH CARBON DIOXIDE REMOVAL
PROCÉDÉ DE SÉPARATION DE DIOXYDE DE CARBONE AINSI QU'INSTALLATION DE TURBINE À GAZ À SÉPARATION DE DIOXYDE DE CARBONE

(30) Priorität: 28.09.2010 DE 102010041536
(43) Veröffentlichungstag der Anmeldung: 07.08.2013
(73) Patentinhaber: Siemens Aktiengesellschaft, 80333 München (DE)
(72) Erfinder: BIRLEY, Roland, 96050 Bamberg (DE); BRUNHUBER, Christian, 91275 Auerbach (DE); KREMER, Hermann, 65835 Liederbach (DE); ZIMMERMANN, Gerhard, 91315 Höchstadt/Aisch (DE)
(86) Internationale Anmeldenummer: PCT/EP2011/066759
(87) Internationale Veröffentlichungsnummer: WO 2012/052262

(56) Entgegenhaltungen:
- EP-A1- 1 303 345
- EP-A1- 1 745 844
- EP-A2- 1 391 669
- DE-T2- 60 214 710
- FR-A1- 2 951 385

## Beschreibung

Die Erfindung betrifft ein Verfahren zur Abscheidung von Kohlendioxid mit einem ersten Absorptionsprozess, einem Verbrennungsprozess, einem zweiten Absorptionsprozess und einem Desorptionsprozess. Die Erfindung betrifft außerdem eine Gasturbinenanlage mit einer Gasturbine, die brennstoffseitig an eine Brenngasleitung angeschlossen ist, und deren Abgaskanal mit einer nachgeschalteten Kohlendioxid-Abscheidevorrichtung verbunden ist.

Bei fossilbefeuerten Kraftwerksanlagen zur Erzeugung elektrischer Energie entsteht durch die Verbrennung eines fossilen Brennstoffes ein kohlendioxidhaltiges Abgas. Zur Vermeidung bzw. zur Verringerung von Kohlendioxid-Emissionen muss Kohlendioxid aus den Abgasen abgetrennt werden. Zur Abtrennung von Kohlendioxid aus einem Gasgemisch sind allgemein verschiedene Methoden bekannt.

Insbesondere zum Abtrennen von Kohlendioxid aus einem Abgas nach einem Verbrennungsprozess (Post Combustion CO2 Capture, Post Cap) ist die Methode der Absorption-Desorption gebräuchlich. In großtechnischem Maßstab wird Kohlendioxid dabei beietwa Atmosphärendruck mit einem Absorptionsmittel aus dem Abgas herausgewaschen. In einem klassischen Absorptions-Desorptions-Prozess wird das Abgas in einer Absorptionskolonne mit einem selektiven Lösungsmittel als Absorptionsmittel in Kontakt gebracht. Dabei wird Kohlendioxid von dem Lösungsmittel absorbiert. Das nun mit Kohlendioxid angereicherte Lösungsmittel wird zur Abtrennung des Kohlendioxids und Regenerierung in einen Desorptionskolonne geleitet. Das Lösungsmittel wird erwärmt (evtl. auch entspannt), wobei Kohlendioxid wieder desorbiert wird und ein regeneriertes Lösungsmittel gebildet wird. Das regenerierte Lösungsmittel wird erneut zur Absorberkolonne geleitet, wo es wieder Kohlendioxid aus dem kohlendioxidhaltigen Abgas aufnehmen kann. Gebräuchliche Absorptionsmittel zeigen eine gute Selektivität und eine hohe Kapazität für das abzutrennende Kohlendioxid. Besonders gut eignen sich Absorptionsmittel, die auf Aminen basieren wie z.B. Monoethanolamin. Auch in der chemischen Industrie werden in der Regel Aminlösungen als Absorptionsmittel eingesetzt.

Zum Abtrennen von Kohlendioxid vor dem Verbrennungsprozess ist das Pre-Combustion CO2 Capture (Pre Cap) Verfahren gebräuchlich, bei dem ein CO-Shift und eine physikalische Kohlendioxid-Wäsche unter erhöhtem Druck erfolgt (IGCC-Konzept).

Bei Nutzung von Standard-Erdgas als Brennstoff für eine Gasturbine findet die Abtrennung von Kohlendioxid aus dem Abgas bevorzugt nach Verbrennung in einer standardisierten Gasturbine mit Vormischverbrennung statt. Standard-Erdgas zeichnet sich dabei durch einen entsprechend hohen Brennwert und einen niedrigen Anteil an inerten Gasen (z.B. Stickstoff oder Kohlendioxid) aus.

Liegt hingegen ein so genanntes schwaches Erdgas vor, welches einen hohen Anteil an inerten Gasen beinhaltet, wie z.B. hoch-Kohlendioxid-haltiges Erdgas (z. B. 30 bis 70% Kohlendioxidgehalt), muss dieses erst für die Verbrennung in einer standardisierten Gasturbine konditioniert werden.

Dazu kann z.B. dem schwachen Erdgas hochwertiges Erdgas zugemischt und somit auf einen Methangehalt angereichert werden, der die Verbrennung in einer standardisierten Gasturbine erlaubt. Auch ist es möglich, über eine Verbrennung mit Sauerstoff und nachfolgender Kondensation von Wasser eine Verbrennung eines schwachen Erdgases in einer standardisierten Gasturbine zu erlauben. Diese Varianten erfordern aber einen hohen Aufwand und zusätzliche Gase.

Alternativ besteht die Möglichkeit, die Gasturbine speziell an das niederkalorische, schwache Erdgas anzupassen. Dies kann aber je nach Maschinentyp einen enormen Entwicklungsaufwand bedeuten.

EP 1 391 669 beschreibt einen CO₂-Absorptionsprozess für Erdgas und einen CO₂-Absorptionsprozess für Abgas, die parallel zueinander geschaltet sind.

Aufgabe der Erfindung ist es daher, ein Verfahren und eine Vorrichtung anzugeben, die einerseits die Verwendung eines schwachen Erdgases mit einer standardisierten Gasturbine erlaubt, und andererseits die Abscheidung des durch die Verbrennung entstehenden Kohlendioxids gewährleistet.

Bezüglich des Verfahrens wird die Aufgabe der Erfindung gelöst durch die Merkmale des Anspruchs 1.

Die Erfindung geht dabei von der Überlegung aus, ein hoch-Kohlendioxid-haltiges Erdgas zunächst vor dem Verbrennungsprozess einem Kohlendioxid-Abscheideprozess zu unterziehen. Dabei wird durch einen chemischen Absorptionsprozess das in dem Erdgas enthaltene Kohlendioxid weitgehend durch ein Lösungsmittel absorbiert. Somit steht für den nachgeschalteten Verbrennungsprozess ein Kohlendioxid-abgreichertes Erdgas zur Verfügung. Das durch die Verbrennung des Erdgases entstehende Kohlendioxid wird in einem nachgeschalteten Abscheideprozess absorbiert. Der Abscheideprozess besteht dabei aus einem Absorber, in dem das Abgas durch ein Lösungsmittel gewaschen wird, und einem Desorber. Erfindungsgemäß wird dem Desorber das nunmehr mit Kohlendioxid angereicherte Lösungsmittel aus dem der Verbrennung vorgeschalteten und dem der Verbrennung nachgeschalteten Absorptionsprozess zusammen zugeführt.

Die Erfindung besteht somit zum Einen darin, einen dem Verbrennungsprozess vorgeschalteten Absorberprozess besonders vorteilhaft mit einem dem Verbrennungsprozess nachgeschalteten Absorberprozess zu kombinieren. Der gestufte Absorptionsprozess, der bei unterschiedlichen Drücken ablaufen kann, wird zudem besonders vorteilhaft miteinander verschaltet, sodass für beide Absorberprozesse nur ein Lösungsmittel und nur ein Desorptionsprozess installiert werden muss. Der dem Verbrennungsprozess vorgeschaltete Absorptionsprozess kann aufgrund des erhöhten Druckniveaus auch deutlich kompakter ausgeführt werden.

Durch die Erfindung ist es damit möglich, auch bei Vorliegen eines stark Kohlendioxid-haltigen Brenn- oder Erdgases eine standardisierte Gasturbine mit Vormischverbrennersystemen einzusetzen. Dadurch können geringere NOx Emissionen erzielt werden. In Kombination mit der Abscheidung aus dem Abgas ist eine signifikant Reduktion der Gesamtemission zu erwarten. Insgesamt können durch die Erfindung sehr Kohlendioxidhaltige Brenn- oder Erdgase verwendet werden, mit insgesamt hohem Kohlendioxid-Abscheidegrad. Dadurch lassen sich die Investitions- und Betriebskosten einer entsprechenden Anlage im Vergleich zum Stand der Technik deutlich reduzieren.

In der Erfindung wird der dem Verbrennungsprozess vorgeschlatete erste Absorptionsprozess bei einem höheren Druck betrieben, als der dem Verbrennungsprozess nachgeschaltete zweite Absorptionsprozess. Dadurch kann der erste Absorptionsprozess auf dem Druck betrieben werden, auf dem sich das angelieferte Brenn- oder Erdgas befindet, z.B. wie es nach Förderung aus dem Gasfeld in der Anlage ankommt. Vorzugsweise liegen derartige Gasdrücke zwischen 20 und 30 bar. Bei entsprechend niedrigem Druckniveau des Brenn- oder Erdgases kann die erste Absorptionsprozess auch im Niederdruckbereich (in etwa atmosphärischer Druck) ausgeführt werden. Das durch den ersten Absorptionsprozess abgereicherte Brenngas muss in diesem Fall aufgrund des geringeren Massenstroms anschließend auf den für den Verbrennungsprozess notwendigen Druck verdichtet werden. Der zweite Absorptionsprozess sowie der Desorptionsprozess werden vorzugsweise bei in etwa atmosphärischem Druck betrieben.

In einer vorteilhaften Weiterentwicklung des erfindungsmäßen Verfahrens wird die erforderliche Wärme für den Desorptionsprozess durch den Verbrennungsprozess bereit gestellt. Dazu wird dem Abgaskanal über einen Wärmetauscherprozess Wärme entnommen, und dem Desorptionsprozess zugeführt. Auf diese Weise kann der Desorptionsprozess sinnvoll durch in der Anlage verfügbare (überschüssige) Energie betrieben werden.

Zweckmäßigerweise wird das Lösungsmittel, welches den Desorptionsprozess regeneriert wieder verlässt, in den ersten Teilstrom, der dem ersten Absorptionsprozess zugeführt wird, und den zweiten Teilstrom, der dem zweiten Absorptionsprozess zugeführt wird, aufgeteilt.

Das Verfahren kommt in einem Gasturbinen- oder Gas- und Dampfturbinen-Kraftwerk zum Einsatz. Dabei umfasst das Kraftwerk eine Gasturbine, eine der Gasturbine nachgeschaltete Kohlendioxid-Abscheidevorrichtung und einen der Gasturbine vorgeschaltete ersten Absorber.

Als Lösungsmittel für die Absorption von Kohlendioxid kommt vorzugsweise eine wässrige Aminosäuresalzlösung zum Einsatz. Prinzipiell sind aber auch andere Lösungsmittel denkbar.

Die auf eine Vorrichtung gerichtete Aufgabe der Erfindung wird gelöst durch die Merkmale des Anspruchs 5.

Nachfolgend wird die Erfindung anhand eines Ausführungsbeispiels des erfindungsgemäßen Verfahrens näher erläutert.

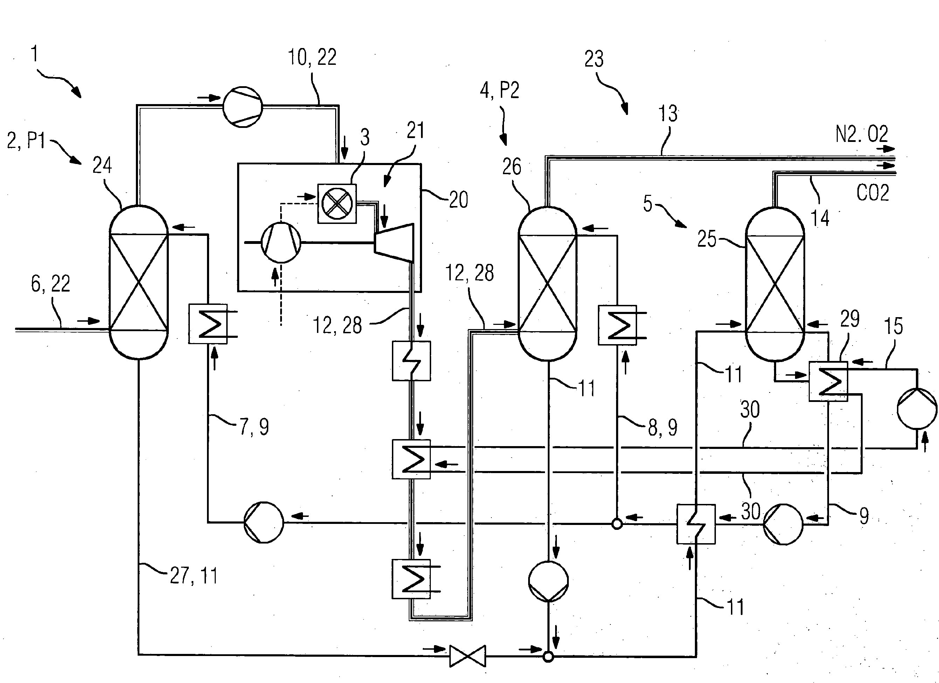

FIG 1 zeigt ein Verfahren 1 zur Abscheidung von Kohlendioxid, und umfasst im Wesentlichen einen ersten Absorptionsprozess 2, einen Verbrennungsprozess 3, einen zweiten Absorptionsprozess 4 und einen Desorptionsprozess 5. Der erste Absorptionsprozess 2 umfasst einen ersten Absorber 24 dem über eine Brenngasleitung 22 ein hoch Kohlendioxid-haltiges Erdgas 6 zugeführt wird. Dem ersten Absorber 24 wird zudem über einem ersten Teilstrom 7 ein Lösungsmittel 9 zugeführt. Das Kohlendioxid aus dem Erdgas 6 wird durch das Lösungsmittel 9 unter Druck absorbiert, sodass den ersten Absorptionsprozess einerseits über die Brenngasleitung 22 ein Kohlendioxid-abgereichertes Erdgas 10 unter hohem Druck verlässt, und andererseits ein Kohlendioxid-angereichertes Lösungsmittel 11 ausgeleitet wird.

Das Kohlendioxid-abgereicherte Erdgas 10 wird nun dem Verbrennungsprozess 3 zugeführt, der Bestandteil einer Gasturbinenanlage 20 ist, und eine Gasturbine 21 umfasst. Durch die Verbrennung des Kohlendioxid-abgereicherten Erdgases 10 entsteht ein Kohlendioxid-haltiges Abgas 12, dass über einen Abgaskanal 28 dem zweiten Absorptionsprozess 4 zugeführt wird. In den Abgaskanal 28 kann ein Dampferzeugerprozess geschaltet sein, der Dampf für eine Dampfturbine erzeugt.

Der zweite Absorptionsprozess 4 umfasst einen zweiten Absorber 26, in den das Kohlendioxid-haltiges Abgas 12 zusammen mit einem Lösungsmittel 9, über einen zweiten Teilstrom 8, zugeführt wird. Das Kohlendioxid aus dem Kohlendioxid-haltigen Abgas 12 wird durch das Lösungsmittel 9 unter im wesentlichen atmosphärischem Druck absorbiert, sodass aus dem zweiten Absorptionsprozess 4 einerseits ein weitgehend von Kohlendioxid gereinigtes Abgas 13, und andererseits ein Kohlendioxid-angereichertes Lösungsmittel 11 ausgeleitet wird.

Das Kohlendioxid-angereicherte Lösungsmittel 11 aus dem ersten Absorptionsprozess 2 und dem zweiten Absorptionsprozess 4 wird zusammen dem Desorptionsprozess 5 zugeführt. Der Desorptionsprozess umfasst einen Desorber 25, in dem das Kohlendioxid-angereicherte Lösungsmittel ausgekocht wird, wobei Kohlendioxid desorbiert wird. Aus dem Desorptionsprozess wird ein abgetrenntes Kohlendioxid 14 und ein Lösungsmittel 9 ausgeleitet, das regeneriert ist.

Die Heizenergie 15 zur Beheizung des Desorbers 25 wird über eine Leitung 30 dem heißen Kohlendioxid-haltiges Abgas 12 entnommen. Dazu wird die Heizenergie über einen Sumpfkocher 29 im Wärmetausch dem Desorber zugeführt.

Der dem Verbrennungsprozess 3 nachgeschaltete zweite Absorptionsprozess 4 und der Desorptionsprozess 5 bilden dabei alleine für sich eine Kohlendioxid-Abscheidevorrichtung, wie sie als Post-Combustion CO2 Capture Prozess bekannt ist.

## Patentansprüche

1. Verfahren zur Abscheidung von Kohlendioxid (1), bei dem
- in einem ersten Absorptionsprozess (2) Kohlendioxid durch in Kontakt bringen eines zugeführten Kohlendioxid-haltigen Erdgas (6) mit einem ersten Teilstrom (7) eines Lösungsmittels (9) absorbiert wird, wobei ein Kohlendioxid-abgereichertes Erdgas (10) und Kohlendioxid-angereichertes Lösungsmittel (11) gebildet wird,
- in einem Verbrennungsprozess (3) einer Gasturbine (21) das Kohlendioxid-abgereicherte Erdgas (10) verbrannt wird, wobei ein Kohendioxid-haltiges Abgas (12) gebildet wird,
- in einem zweiten Absorptionsprozess (4) Kohlendioxid durch in Kontakt bringen des Kohlendioxid-haltigen Abgas (12) mit einem zweiten Teilstrom (8) des Lösungsmittels (9) absorbiert wird, wobei ein von Kohlendioxid gereinigtes Abgas (13) und Kohlendioxid-angereichertes Lösungsmittel (11) gebildet wird, wobei
der erste Absorptionsprozess (2) bei einem ersten Druck (P1) durchgeführt wird, und wobei der Druck (P1) dem Druck des zugeführten Kohlendioxid-haltigen Erdgases (6) entspricht, und höher eingestellt wird, als ein im zweiten Absorptionsprozess (4) eingestellter Druck (P2),
- in einem Desorptionsprozess (5) der erste Teilstrom (7) und der zweite Teilstrom (8) des Kohlendioxidangereicherten Lösungsmittels (11) zusammengeführt und Kohlendioxid (14) durch Zufuhr von Heizenergie (15) desorbiert wird, wobei Kohlendioxid-abgereichertes Lösungsmittel (9) gebildet wird.

2. Verfahren nach Anspruch 1, bei dem die Heizenergie (15) für den Desorptionsprozess (5) dem Kohendioxid-haltigen Abgas (12) entzogen wird.

3. Verfahren nach einem der Ansprüche 1 oder 2, bei dem das Lösungsmittel (9) in den ersten Teilstrom (7) und den zweiten Teilstrom (8) aufgeteilt wird, wobei der erste Teilstrom (7) dem ersten Absorptionsprozess (2) und der zweite Teilstrom (8) dem zweiten Absorptionsprozess (4) zugeführt wird.

4. Verfahren nach einem der Ansprüche 1 bis 3, **gekennzeichnet durch** die Anwendung in einer Gasturbinen-Kraftwerksanlage mit einer Gasturbine (21), einer nachgeschalteten Kohlendioxid-Abscheidevorrichtung (23), und einem der Gasturbine vorgeschalteten ersten Absorber (24).

5. Gasturbinenanlage (20) mit einer Gasturbine (21), die brennstoffseitig an eine Brenngasleitung (22), insbesondere an eine Erdgasleitung angeschlossen ist, und deren Abgaskanal (28) mit einer nachgeschalteten Kohlendioxid-Abscheidevorrichtung (23) verbunden ist, wobei die Kohlendioxid-Abscheidevorrichtung (23) einen zweiten Absorber (26) und einen Desorber (25) umfasst,
**dadurch gekennzeichnet, dass**
in die Brenngasleitung (22) ein erster Absorber (24) geschaltet ist, der über eine Absorptiosmittelleitung (27) mit dem Desorber (25) verbunden ist, und wobei der erste Absorber (24) ein Hochdruckabsorber ist, der für den Druck der Erdgasleitung (22) ausgelegt ist, und der zweite Absorber (26) ein Niederdruckabsorber ist, der für in etwa Atmosphärendruck ausgelegt ist.

6. Gasturbinenanlage (20) nach Anspruch 5, **dadurch gekennzeichnet, dass** der Desorber (25) einen Sumpfkocher (29) umfasst, und dass in den Abgaskanal ein Wärmetauscher geschaltet ist, der mit dem Sumpfkocher (29) über eine Leitung (30) verbunden ist, sodass Wärme aus dem Abgaskanal (28) in den Desorber (25) übertragbar ist.

7. Gas- und Dampfturbinenanlage umfassend eine Gasturbinenanlage (20) nach einem der Ansprüche 5 oder 6, mit einem der Gasturbine (21) abgasseitig nachgeschalteten Kessel und einer über den Kessel angetriebenen Dampfturbine.

## Claims

1. Method for capturing carbon dioxide (1), in which
- in a first absorption process (2) carbon dioxide is absorbed by bringing a supplied carbon dioxide-containing natural gas (6) into contact with a first sub-stream (7) of a solvent (9), a carbon dioxide-depleted natural gas (10) and carbon dioxide-enriched solvent (11) being formed,
- in a combustion process (3) of a gas turbine (21) the carbon dioxide-depleted natural gas (10) is combusted, a carbon dioxide-containing flue gas (12) being formed,
- in a second absorption process (4) carbon dioxide is absorbed by bringing the carbon dioxide-containing flue gas (12) into contact with a second sub-stream (8) of the solvent (9), a flue gas (13) purified of carbon dioxide and carbon dioxide-enriched solvent (11) being formed,
- the first absorption process (2) being carried out at a first pressure (P1), and the pressure (P1) corresponding to the pressure of the supplied carbon dioxide-containing natural gas (6), and being set higher than a pressure (P2) set in the second absorption process (4),
- in a desorption process (5) the first sub-stream (7) and the second sub-stream (8) of the carbon dioxide-enriched solvent (11) are brought together and carbon dioxide (14) is desorbed through the input of thermal energy (15), carbon dioxide-depleted solvent (9) being formed.

2. Method according to Claim 1, in which the thermal energy (15) for the desorption process (5) is extracted from the carbon dioxide-containing flue gas (12).

3. Method according to one of Claims 1 or 2, in which the solvent (9) is subdivided into a first sub-stream (7) and a second sub-stream (8), the first sub-stream (7) being supplied to the first absorption process (2) and the second sub-stream (8) being supplied to the second absorption process (4).

4. Method according to one of Claims 1 to 3, **characterized by** use in a gas turbine power plant with a gas turbine (21), a downstream carbon dioxide capture device (23), and a first absorber (24) arranged upstream of the gas turbine.

5. Gas turbine plant (20) with a gas turbine (21), which is connected on the fuel side to a fuel gas line (22), in particular to a natural gas line, and the flue gas duct (28) of which is connected to a downstream carbon dioxide capture device (23), the carbon dioxide capture device (23) comprising a second absorber (26) and a desorber (25),
**characterized in that** a first absorber (24) is connected into the fuel gas line (22), which first absorber is connected to the desorber (25) via an absorbent line (27), and the first absorber (24) being a high pressure absorber, which is designed for the pressure of the natural gas line (22), and the second absorber (26) being a low pressure absorber, which is designed for around atmospheric pressure.

6. Gas turbine plant (20) according to Claim 5, **characterized in that** the desorber (25) comprises a reboiler (29), and **in that** a heat exchanger is connected into the flue gas duct, which heat exchanger is connected to the reboiler (29) via a line (30), such that heat from the flue gas duct (28) may be transferred into the desorber (25).

7. Gas and steam turbine plant comprising a gas turbine plant (20) according to one of Claims 5 or 6, with a boiler arranged downstream of the gas turbine (21) on the flue gas side and a steam turbine driven by means of the boiler.

## Revendications

1. Procédé de séparation du dioxyde de carbone (1), dans lequel
- dans une première opération (2) d'absorption, on absorbe du dioxyde de carbone en mettant un gaz (6) naturel contenant du dioxyde de carbone apporté en contact avec un premier courant (7) partiel d'un solvant (9), en formant du gaz (10) naturel appauvri en dioxyde de carbone et du solvant (11) enrichi en dioxyde de carbone,
- dans une opération (3) de combustion d'une turbine (21) à gaz, on brûle le gaz (10) naturel appauvri en dioxyde de carbone, en formant un gaz (12) d'échappement contenant du dioxyde de carbone,
- dans une deuxième opération (4) d'absorption, on absorbe du dioxyde de carbone en mettant du gaz (12) d'échappement contenant du dioxyde de carbone en contact avec un deuxième courant (8) partiel du solvant (9), en formant un gaz (13) d'échappement épuré de dioxyde de carbone et du solvant enrichi en dioxyde de carbone, dans lequel
- on effectue la première opération (2) d'absorption à une première pression (P1) et la pression (P1) correspond à la pression du gaz (6) naturel contenant du dioxyde de carbone apporté et est réglé à une valeur plus grande qu'une pression (P2) établie dans la deuxième opération (4) d'absorption,
- on réunit dans une opération (5) de désorption, le premier courant (7) partiel et le deuxième courant (8) partiel du solvant (11) enrichi en dioxyde de carbone et, par apport d'énergie (15) calorifique, on désorbe du dioxyde (14) de carbone en formant du solvant (9) appauvri en dioxyde de carbone.

2. Procédé suivant la revendication 1, dans lequel on soutire l'énergie (15) calorifique pour l'opération (5) de désorption du gaz (12) d'échappement contenant du dioxyde de carbone.

3. Procédé suivant la revendication 1 ou 2, dans lequel on sépare le solvant (9) en le premier courant (7) partiel et en le deuxième courant (8) partiel, le premier courant (7) partiel étant envoyé à la première opération (2) d'absorption et le deuxième courant (8) partiel à la deuxième opération (4) d'absorption.

4. Procédé suivant l'une des revendications 1 à 3, **caractérisé par** l'utilisation dans une centrale électrique à turbine à gaz ayant une turbine à gaz (21), un dispositif (23) de séparation de dioxyde de carbone monté en aval et un premier absorbeur (24) monté en amont de la turbine à gaz.

5. Installation (20) à turbine à gaz, comprenant une turbine (21) à gaz, qui est raccordée du côté du combustible à un conduit (22) de gaz combustible, notamment à un conduit de gaz naturel, et dont le canal (28) d'échappement communique avec un dispositif (23) de séparation de dioxyde de carbone en aval, le dispositif (23) de séparation de dioxyde de carbone comprenant un deuxième absorbeur (26) et un désorbeur (25),
**caractérisée en ce que**
il est monté dans le conduit (22) pour du gaz combustible un premier absorbeur (24), qui communique avec le désorbeur (25) par un conduit (27) d'agent d'absorption et dans lequel le premier absorbeur (24) est un absorbeur de haute pression conçu pour la pression du conduit (22) pour le gaz naturel et le deuxième absorbeur (26) est un absorbeur de basse pression conçu pour à peu près la pression atmosphérique.

6. Installation (20) à turbine à gaz suivant la revendication 5, **caractérisée en ce que** le désorbeur (25) comprend un rebouilleur (29) et **en ce qu'**il est monté dans le canal des gaz d'échappement un échangeur de chaleur, qui communique avec le rebouilleur (29) par un conduit (30) de manière à pouvoir transmettre de la chaleur du canal (28) pour les gaz d'échappement au désorbeur (25).

7. Installation de turbine à gaz et de turbine à vapeur comprenant une installation de turbine à gaz suivant l'une des revendications 5 ou 6, ayant une chaudière montée en aval du côté des gaz d'échappement de la turbine (21) à gaz et une turbine à vapeur entraînée par la chaudière.
